# EUROPEAN PATENT SPECIFICATION

(11) **EP 3 804 520 B1**
(45) Date of publication and mention of the grant of the patent: **02.08.2023**
(21) Application number: 19810337.6
(22) Date of filing: 29.05.2019
(51) Int. Cl.: A01N 59/00, A01G 7/06, A01N 25/02, A01P 3/00

(54) **METHOD OF CONTROLLING POWDERY MILDEW**
VERFAHREN ZUR BEKÄMPFUNG VON MEHLTAU
PROCÉDÉ DE LUTTE CONTRE LE MILDIOU PULVÉRULENT

(30) Priority: 30.05.2018 JP 2018103059
(43) Date of publication of application: 14.04.2021
(73) Proprietor: AQUASOLUTION Corporation, Tomi-shi Nagano 389-0514 (JP)
(72) Inventor: TANAKA Hiroyuki, Tokyo 102-0084 (JP)
(74) Representative: Piotrowicz, Pawel Jan Andrzej
(86) International application number: PCT/JP2019/021266
(87) International publication number: WO 2019/230789

(56) References cited:
- WO-A1-2017/179673
- CN-A- 102 640 668
- CN-A- 107 347 919
- JP-A- H08 175 921
- JP-A- 2010 094 117
- JP-A- 2011 073 988
- JP-A- 2011 073 988
- JP-A- 2016 053 004
- JP-A- 2018 002 646
- JP-A- 2018 075 240

## Description

### TECHNICAL FIELD

The present invention relates to a method of controlling powdery mildew.

### BACKGROUND ART

Powdery mildew is a generic term for a plant disease caused by ascomycetes belonging to the family Erysiphaceae, and it is known that when powdery mildew develops, leaves or stems become white as if they were dusted with udon noodle flour.

For control of powdery mildew, fungicides such as an azole fungicide have conventionally been used.

However, these fungicides suffer from a serious problem of emergence of drug resistance of pathogens in addition to a problem of safety to humans and plants.

Addressing such problems, Patent Literature 1 proposes "a liquid composition for controlling powdery mildew, comprising an aqueous solution containing a eucalyptus leaf extract and a water-soluble chitosan as an active ingredient for prevention of powdery mildew infection or prevention of disease" ([Claim 1]).

### CITATION LIST

### PATENT LITERATURE

Patent Literature 1: JP 2009-019011 A

JP2018002646A discloses an agent for plant containing a porous ceramic obtained by combustion synthesizing a starting material containing titanium and at least one kind selected from a group consisting of carbon, boron, nitrogen and silicon, and an extermination or pet control method of plant diseases having a process for applying the agent for plant.

CN 107 347 919 discloses a compound bactericide for preventing and controlling scab of wheat. The compound bactericide is prepared from the following raw materials in parts by weight: 10 to 20 parts of toxin degrading mixture, 5 to 10 parts of high-efficiency antagonistic microbe, 10 to 20 parts of cyanoacrylate, 3 to 6 parts of resistance-enhancing hymexazol, 8 to 16 parts of micro/nanometer air bubble ozone water with concentration of 7.8 to 8.3mg L<-1>, 14 to 20 parts of nanometer water-borne adhesive, and 3 to 5 parts of carbon enzyme. The compound bactericide has the advantages that the compound bactericide is formed by compounding the bactericide, the high-efficiency antagonistic microbe and multiple toxin degrading bacteria, the micro/nanometer air bubble ozone water is used, the generation of scab of wheat is effectively controlled, and the inhibiting and degrading effects on the breeding of fusarium toxin in the later period of wheat filling are realized; compared with the conventional preventing and controlling method, the content of fusarium toxin in the wheat can be reduced by 50% to 70%; by adding the toxin degrading and adsorbing preparation, the injury to crops and animals by toxin can be obviously reduced through the microbe degrading and biological adsorbing.

CN 102 640 668 A discloses a method controlling greenhouse aeroborne diseases, which comprises spraying micro-nano bubble ozone water with ozone concentration to be 10-20mg/L to overground part of crops, enabling the spraying quantity to be 5-20L/mu, and spraying for once every 7-10 days. The method enables an ozone sterilization technology to be combined with a micro-nano bubble technology so as to control the aeroborne diseases. Ozone is generated by an ozone generator and is rapidly dissolved in water through a micro-nano bubble generating device so that the high-concentration micro-nano bubble ozone water is manufactured, fog drops are generated through a spraying device to be sprayed onto the surfaces of suffering crops, and disease control is performed. By means of the method, the greenhouse diseases are effectively controlled, and pesticide residue is avoided.

JP 2011 073988 A discloses a functional agent for controlling plant diseases caused by viruses, fungi or insect pests is composed of neutral electrolyzed water obtained by subjecting water 14 to be treated comprising water including 0.1-3 wt.% sodium chloride to electrolysis while causing vibration fluidized agitation of the water 14 to be treated with the use of a vibration agitation means to cause vibration fluidized agitation in the water 14 to be treated by transmitting vibrations generated by a vibrating motor 16d through a vibrating bar 16e to vibrating blades 16f fixed to the vibrating bar to vibrate the vibrating blades and the residual chlorine concentration in the neutral electrolyzed water is 1-500 ppm.

### SUMMARY OF INVENTION

### TECHNICAL PROBLEMS

The present inventor has studied the liquid composition for controlling powdery mildew as described in Patent Literature 1, and discovered that it is necessary to appropriately manage the concentrations of the eucalyptus leaf extract and the water-soluble chitosan contained in the aqueous solution.

Accordingly, an object of the present invention is to provide a method of controlling powdery mildew, the method being capable of achieving a high controlling effect with a simple operation.

### SOLUTION TO PROBLEMS

The present inventor has conducted an intensive study to attain the above-described object and found that a high controlling effect on powdery mildew can be obtained by applying nanobubble water to a plant, whereby the present invention has been completed.

That is, the present inventor found that the above-described object can be attained by the following constitution.
[1] A method of controlling powdery mildew, the method comprising applying nanobubble water to a plant. The nanobubble water contains bubbles in an amount of from 1 × 10⁸ to 1 × 10¹⁰ bubbles/mL generated by a pressurized dissolution method. Bubbles contained in the nanobubble water include oxygen where, the containing oxygen means to contain oxygen at a higher concentration than the oxygen concentration in the air.
[2] The method of controlling powdery mildew according to [1], wherein at least one of sprinkling using the nanobubble water and sprinkling of an agrochemical diluted with the nanobubble water is carried out.
[3] The method of controlling powdery mildew according to [1] or [2], wherein the nanobubble water contains bubbles with a modal particle size of from 10 to 500 nm.
[4] The method of controlling powdery mildew according to any one of [1] to [3] , wherein the nanobubble water contains bubbles in an amount of from 1 × 10⁸ to 1 × 10¹⁰ bubbles/mL.
[5] The method of controlling powdery mildew according to any one of [1] to [4] , wherein the plant is a fruit vegetable.
[6] The method of controlling powdery mildew according to [5] , wherein the plant is a solanaceous plant or a rosaceous plant.
[7] The method of controlling powdery mildew according to [6], wherein the plant is bell pepper or rose.

### ADVANTAGEOUS EFFECTS OF INVENTION

the present invention is not limited to the embodiment.

In the description, a numerical range indicated using the form of "(from)... to..." should read as a range including the former number as the lower limit value and the latter number as the upper limit value.

The method of controlling powdery mildew of the present invention (hereinafter also referred to as "controlling method of the invention") is a method of controlling powdery mildew where nanobubble water is applied to a plant.

As described above, "powdery mildew" is a generic term for a plant disease caused by ascomycetes belonging to the family Erysiphaceae.

Specific examples of the powdery mildew include powdery mildew of wheat (Blumeria graminis), powdery mildew of apple (Podosphaera leucotricha), powdery mildew of pair (Phyllactinia mali), powdery mildew of grape (Uncinula necator), powdery mildew of persimmon (Phyllactinia kakicola), powdery mildew of watermelon (Sphaerotheca fuliginea), powdery mildew of cucumber (Erysiphe polygoni, Sphaerotheca cucurbitae), powdery mildew of melon (Sphaerotheca fuliginea), powdery mildew of pumpkin (Sphaerotheca cucurbitae), powdery mildew of eggplant (Erysiphe cichoracerum, Oidiopsis sicula), powdery mildew of tomato (Oidium lycopersici), powdery mildew of bell pepper (Oidiopsis sicula), powdery mildew of strawberry (Sphaerotheca aphanis), powdery mildew of carrot (Erysiphe heraclei), powdery mildew of tobacco (Erysiphe cichoracearum), powdery mildew of roses (Sphaerotheca pannosa), and powdery mildew of sunflower (Erysiphe cichoracearum).

According to the present invention, as described above, a high controlling effect on powdery mildew can be obtained by applying nanobubble water to a plant.

The reason thereof is not precisely clarified, but the present inventor has the following presumption.

That is, taking into consideration that in EXAMPLES described later, the symptoms of powdery mildew were improved in a test area 1-1 where nanobubble water was sprinkled to plants (bell pepper) in which powdery mildew had developed, it is presumed that in the present invention, by applying the nanobubble water to the plants, pathogens adhering to the stems and leaves of the plants could be washed out, and pathogens present in soil or a culture medium or around the roots of the plants could be killed by cleansing or surface active action of the nanobubble water .

Nanobubble water and optional components used in the controlling method of the invention will be described below in detail.

### [Nanobubble water]

Nanobubble water used in the controlling method of the invention is water which contains bubbles having a diameter of less than 1 µm and into which the bubbles are incorporated. The expression "water into which the bubbles are incorporated" intends to exclude water containing the bubbles that are inevitably contained due to, for example, water (such as well water containing impurities) used to generate nanobubble water.

The diameter (particle size) of bubbles contained in nanobubble water, as well as the modal particle size of bubbles and the number of bubbles to be described later are the values that are measured using the nanoparticle tracking analysis of the Brownian motion-moving speed of bubbles in water. In the present description, numeral values measured by the nanoparticle analysis system, NanoSight series (manufactured by NanoSight Ltd.) are used.

The nanoparticle analysis system, NanoSight series (manufactured by NanoSight Ltd.) can measure the Brownian motion speed of particles and calculate the diameter (particle size) based on the measured speed. The modal particle size can be determined as the mode diameter from the particle size distribution of the existing nanoparticles.

In the present invention, the modal particle size of bubbles contained in the nanobubble water is preferably from 10 to 500 nm, more preferably from 30 to 300 nm, and even more preferably from 70 to 130 nm, because the controlling effect on powdery mildew can be further improved.

Gas constituting bubbles contained in the nanobubble water contain oxygen at a concentration higher than that found in air. The oxygen concentration is preferably not less than 30 vol% of the bubbles, and preferably more than 50 vol% and not more than 100 vol%.

The nanobubble water contains bubbles in an amount of from 1 × 10⁸ to 1 × 10¹⁰ bubbles/mL because the controlling effect on powdery mildew is further improved, more preferably more than 1 × 10⁸ bubbles/mL and less than 1 × 10¹⁰ bubbles/mL, and even more preferably from 5 × 10⁸ to 5 × 10⁹ bubbles/mL because the bubble generation time and the bubble existence are particularly well balanced.

The nanobubble water is generated by a pressurized dissolution method. The controlling method of the invention includes a generation step of generating the nanobubble water prior to application of the nanobubble water. That is, the controlling method of the invention may be a controlling method including, for example, a generation step of introducing water from a water source such as a water storage tank, a well or agricultural water into a nanobubble generating apparatus to generate nanobubble water, and an application step of applying the generated nanobubble water. Exemplary techniques of introducing water from a water source into a nanobubble generating apparatus include a technique in which water is drawn from a water source using a tub, a pump or another device and supplied to the nanobubble generating apparatus, and a technique in which water is directly supplied to a nanobubble generating apparatus from a flow path that is installed between a water source and the nanobubble generating apparatus and connected to the nanobubble generating apparatus.

As the method of generating the nanobubble water, a generation method using an apparatus that does not intentionally generate a radical is preferred, and a specific example thereof is a generation method using, for instance, the nanobubble generating apparatus described in paragraphs [0080] to [0100] of JP2018-15715 A.

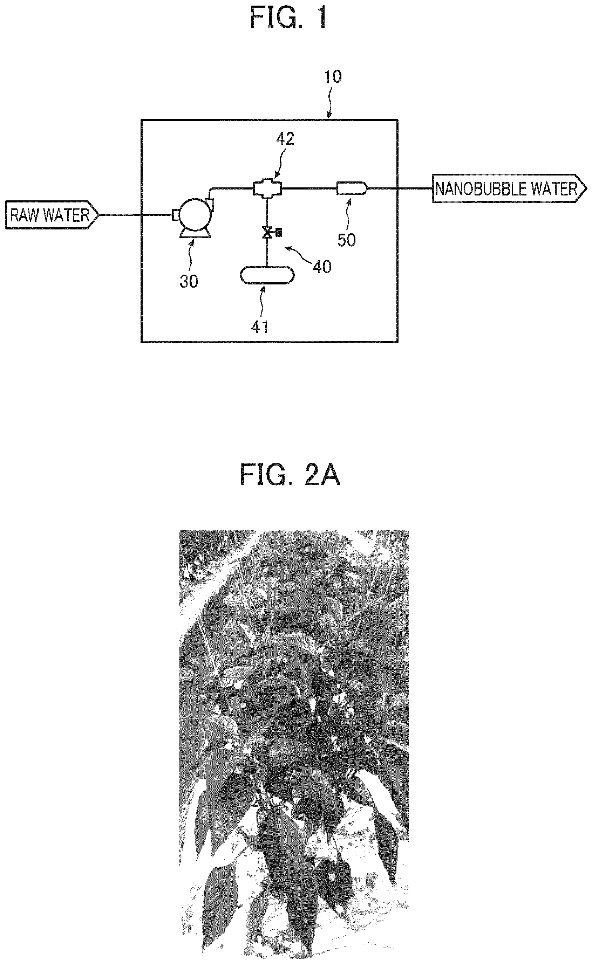

Another example of the nanobubble generating apparatus that does not intentionally generate a radical is an ultrafine bubble generating apparatus including a liquid discharger that discharges water, a gas incorporating device that pressurizes gas and incorporates the gas into the water discharged from the liquid discharger, and an ultrafine bubble generator that allows the water having the gas incorporated therein to pass through an inside of the ultrafine bubble generator to generate ultrafine bubbles in the water, wherein, between the liquid discharger and the ultrafine bubble generator, the gas incorporating device pressurizes gas and incorporates the gas into a liquid being in a pressurized state flowing toward the ultrafine bubble generator. Specifically, a generation method using a nanobubble generating apparatus shown in FIG. 1 is exemplified.

A nanobubble generating apparatus 10 shown in FIG. 1 includes therein a liquid discharger 30, a gas incorporating device 40 and a nanobubble generating nozzle 50.

The liquid discharger 30 comprising a pump draws raw water of nanobubble water (e.g., well water) therein and discharges the raw water. The gas incorporating device 40 includes a vessel 41, in which pressurized gas is enclosed, and a substantially cylindrical gas incorporating device body 42. While allowing the water discharged from the liquid discharger 30 to flow inside the gas incorporating device body 42, the gas incorporating device 40 introduces the pressurized gas of the vessel 41 into the gas incorporating device body 42. In this manner, gas-incorporated water is generated in the gas incorporating device body 42.

The nanobubble generating nozzle 50 is to generate nanobubbles in the gas-incorporated water according to the principle of pressurized dissolution when the gas-incorporated water passes through an inside of the nanobubble generating nozzle 50, and the structure thereof may be the same as the structure of the nanobubble generating nozzle described in JP2018-15715 A. Nanobubble water generated in the nanobubble generating nozzle 50 is ejected from a tip end of the nanobubble generating nozzle 50, then flows out the nanobubble generating apparatus 10, and is delivered to a predetermined destination via a flow path that is not shown.

As described above, between the liquid discharger 30 and the nanobubble generating nozzle 50 in the nanobubble generating apparatus 10, the gas incorporating device 40 introduces pressurized gas into water (raw water) being in a pressurized state flowing toward the nanobubble generating nozzle 50. In this manner, defects such as cavitation that may occur when gas is incorporated into water on the intake side (suction side) of the liquid discharger 30 can be avoided. Since gas is incorporated into water as being in a pressurized (compressed) state, gas can be incorporated into water against the water pressure at the gas incorporation location. Accordingly, gas can be appropriately incorporated into water without particularly generating a negative pressure at the gas incorporation location.

In addition, the liquid discharger 30 is connected on the suction side thereof with the flow path of water supplied from a water source such as a well or a water tap, and the pressure of the water flowing from the upstream side of the liquid discharger 30 into the liquid discharger 30 in the flow path (i.e., the water pressure on the suction side) is preferably a positive pressure. When this is the case, the above-described constitution is more effective. More specifically, when the water pressure (the suction pressure) on the upstream side of the liquid discharger 30 is a positive pressure, gas is incorporated into water on the downstream side of the liquid discharger 30; the constitution of the nanobubble generating apparatus 10 capable of appropriately incorporating gas into water also on the downstream side of the liquid discharger 30 becomes more significant.

Further, water used to generate the nanobubble water is not particularly limited, and use can be made of, for example, rainwater, tap water, well water, agricultural water and distilled water.

Such water may be water that has been subjected to another treatment before being used to generate nanobubble water. Another treatment may be exemplified by pH adjustment, precipitation, filtration, or disinfection (sterilization). In particular, when agricultural water is used, for instance, agricultural water that has been typically subjected to at least one of precipitation and filtration may be used.

In the present invention, a mode of applying the nanobubble water to a plant varies depending on the plant cultivation method and thus is not particularly limited, and examples thereof include a mode where the nanobubble water is sprinkled in the soil culture, a mode where an agrochemical diluted with the nanobubble water is sprinkled in the soil culture, a mode where a culture medium is supplied with a culture liquid diluted with the nanobubble water in the nutrient solution culture (water culture, spray culture or solid medium culture) or nutrient-solution soil culture (irrigation and fertilization culture), and a mode where the nanobubble water alone is sprinkled (applied through irrigation) in the nutrient-solution soil culture.

Among these, the mode where at least one of sprinkling using the nanobubble water and sprinkling of an agrochemical diluted with the nanobubble water is carried out is preferred because the high controlling effect can be achieved through the simpler operation.

Here, the method of "sprinkling water" as one of the application modes is not particularly limited, and when the culture method is the soil culture, for example, a method involving spraying water over an entire of a plant, a method involving spraying water over a part of a plant (e.g., stems or leaves), and a method involving spraying water over soil in which a plant is planted may be adopted. When the culture method is the nutrient-solution soil culture, the water sprinkling may be carried out through irrigation as described above.

In the present invention, the application time of the nanobubble water to a plant varies depending on the application mode or the plant type and thus is not particularly limited. For example, when fruit vegetables are cultivated in the soil culture, the application time may be an entire period from the seeding to the harvesting, or the nanobubble water may be applied only in a certain period of time (e.g., at the seeding and in the seeding-raising period).

### <Agrochemical>

As an agrochemical to be diluted with the nanobubble water, a conventionally known medical agent used in a method of controlling powdery mildew can be used.

Specific examples of such the medical agent include azole fungicides such as propiconazole, prothioconazole, triadimenol, prochloraz, penconazole, tebuconazole, flusilazole, diniconazole, bromuconazole, epoxiconazole, difenoconazole, cyproconazole, metconazole, triflumizole, tetraconazole, microbutanil, fenbuconazole, hexaconazole, fluquinconazole, triticonazole, bitertanol, imazalil, flutriafol, simeconazole, and ipconazole.

In the present invention, the amount of an agrochemical used is preferably 0.00001 to 10 parts by mass, and more preferably 0.00005 to 5 parts by mass based on 100 parts by mass of the nanobubble water from the viewpoint of safety to humans and plants and the like.

### <Additional component>

The nanobubble water may further contain an additional component other than the optional agrochemical described above.

Examples of the additional components include a fertilizer, a surfactant, an antifreezing agent, a defoaming agent, a preservative, an antioxidant and a thickening agent. The type and an amount of an additional component are not particularly limited and may be selected depending on the intended purpose.

Meanwhile, in the present invention, it is preferable that the additional component contains substantially no radical in the nanobubble water. "Containing substantially no radical" does not mean to exclude a case where a radical is inevitably contained due to water (e.g., well water containing impurities) used to generate the nanobubble water but means to exclude a case where a radical is generated and added through a certain operation.

### [Plant]

In the present invention, the plant to which the nanobubble water is applied is not particularly limited as long as it is a plant that could be infected with powdery mildew.

Example of such a plant include fruit vegetables such as solanaceous plants (for example, eggplant, pepino, tomato (including grape tomato), tamarillo, *Capsicum annum,* shishito pepper, habanero, bell pepper, paprika and colored bell pepper), araliaceous plants (for example, *Gamblea innovans*), cucurbitaceous plants (for example, pumpkin, zucchini, cucumber, *Cucumis metuliferus, Cucumis melo var. conomon, Momordica charantia, Benincasa hispida,* chayote, *Luffa cylindrica,* calabash, watermelon, melon and *Cucumis melo var. makuwa*), malvaceae plants (for example, okra), and rosaceous plants (for example, rose and strawberry);
grains such as rice, wheat, and corn;
root vegetables such as turnip, Japanese radish, *Raphanus sativus L. var. sativus,* Japanese horseradish, horseradish, burdock, Chinese artichoke, ginger, carrot, *Allium chinense,* lotus root, and lily bulb; and
fruit trees such as citrus unshiu, apple, peach, nashi pear (*Pyrus pyrifolia*), pear, banana, grape, cherry, oleaster, rubus, blueberry, raspberry, blackberry, mulberry, loquat, fig, persimmon, *Arabia quinata,* mango, avocado, jujube, pomegranate, passion fruit, pineapple, banana, papaya, apricot, *Prunus mume,* plum, peach, kiwifruit, *Pseudocydonia sinensis, Myrica rubra,* chestnut, miracle fruit, guava, star fruit and acerola.

Among these, fruit vegetables are preferred, solanaceous plants or rosaceous plants are more preferred, and bell pepper or rose is further more preferred, because the controlling method of the invention exhibits the higher efficiency.

### EXAMPLES

The present invention is described below more specifically by way of examples. The materials, amounts of use, ratios, treatments and treatment procedures illustrated in the examples below may be modified as appropriate as long as they do not depart from the scope and spirit of the present invention. Therefore, the scope of the present invention should not be construed as being limited to the following examples.

### [Experiment 1]

### <Details of Experiment 1>

The experiment was carried out in greenhouses for bell pepper (variety: ACE PIMENT) cultivation in Minami-ku, Kumamotoshi, Kumamoto, with the following separated areas.

Test area 1-1: In a greenhouse of total 2100 plants including 30 plants of bell pepper in which powdery mildew had developed, the nanobubble water generated by the method described below was used and sprinkled over soil (roots) for 20 minutes once in two days from October to December, 2017.

Test area 1-2: In a greenhouse of total 2100 plants including 200 plants of bell pepper in which powdery mildew had developed, well water was used and sprinkled over soil (roots) for 20 minutes once in two days from October to December, 2017, and nanobubble water was not used.

According to a normal method, the sprinkling amount was appropriately varied depending on the growth of bell pepper, the weather or other factors and was controlled to be generally same in both the test areas.

### <Nanobubble water generation method>

Nanobubble water was generated using a nanobubble generating apparatus [200V, 40 L/min type; manufactured by Kakuichi Co., Ltd., Aqua Solution Division (currently Aqua Solutions Corporation)] where bubbles (nanobubbles) were generated in water by the pressurized dissolution.

Water used to generate nanobubble water was well water, and the gas used to form the bubbles was oxygen (industrial oxygen, oxygen concentration: 99.5 vol%).

Nanobubbles were generated using the foregoing nanobubble generating apparatus under the conditions with which the analysis by the nanoparticle analysis system, NanoSight LM10 (manufactured by NanoSight Ltd.) would have the following results.
* Number of bubbles per 1 mL of water: 5 x 10⁸ bubbles/mL
* Modal particle size of bubbles: 100 nm

### <Evaluation of control of powdery mildew>

In each test area, the front and back of the leaves were visually checked for all the plants of bell pepper in which powdery mildew had already developed before the experiment. The results are shown below.

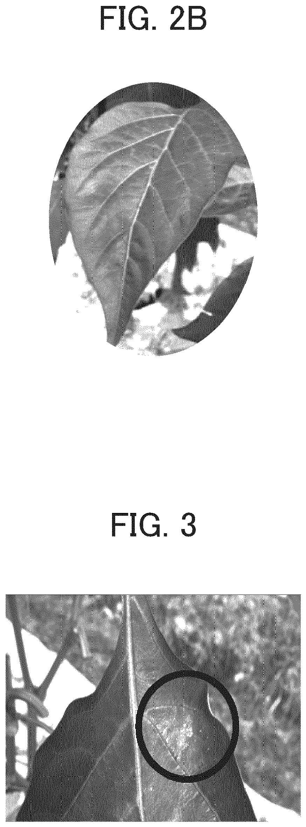

Test area 1-1: The symptoms of powdery mildew were improved in all of the plants (see FIGS. 2A and 2B). In particular, as shown in FIG. 2B, mildew spots as seen in the leaf shown in FIG. 3 could not be confirmed.

Test area 1-2: The symptoms of powdery mildew were not improved in any of the plants (see FIG. 3).

### [Experiment 2]

### <Details of Experiment 2>

The experiment was carried out in an agricultural field of rose (variety: ALPHA-STARDUST) cultivation in Kakegawa-shi, Shizuoka from April, 2018 to January, 2019, with the following separated areas. The respective test areas were made in the same plastic house.

Test area 2-1: In the plastic house culture, tap water was used for sprinkling, and nanobubble water was not used.

Test area 2-2: In the plastic house culture, nanobubble water in which the number of bubbles per 1 mL of water was adjusted to 5 × 10⁸ bubbles/mL was used for sprinkling.

In each of the test areas, 50 plants of rose were cultivated.

According to a normal method, the frequency of sprinkling and the sprinkling amount were appropriately varied depending on the growth of rose, the weather or other factors and were controlled to be generally same in the two test areas.

In Experiment 2, an agrochemical was sprinkled in both the test areas, but nanobubble water was not used to dilute the agrochemical.

### <Nanobubble water generation method>

Nanobubble water was generated using a nanobubble generating apparatus (100V, 10 L/min type; manufactured by Aqua Solutions Corporation) where bubbles (nanobubbles) were generated in water by the pressurized dissolution.

Water used to generate nanobubble water was tap water, and gas used to form the bubbles was oxygen (industrial oxygen, oxygen concentration: 99.5 vol%).

Nanobubbles were generated using the foregoing nanobubble generating apparatus under the conditions with which the analysis by the nanoparticle analysis system, NanoSight LM10 (manufactured by NanoSight Ltd.) would have the following results.
* Number of bubbles per 1 mL of water: 5 × 10⁸ bubbles/mL
* Modal particle size of bubbles: 100 nm

### <Evaluation of control of powdery mildew>

For the 50 plants in each test area, the degree of development of powdery mildew in 10 leaves arbitrarily selected from the upper region of a plant (one-third the region from the top that is specified when the height from the ground surface is set to 1) was evaluated according to the following criteria during the cultivation period (January 16, 2019), and the number of the plants falling into each evaluation category was counted.

### [Evaluation categories]

"No development": No development of powdery mildew was confirmed in any of 10 leaves.

"Mild development": Development of powdery mildew was confirmed in 1 to 3 leaves out of 10 leaves, and the region in which powdery mildew had developed was less than 1/10 of the surface area of one leaf.

"Severe development": Development of powdery mildew was confirmed in 4 or more leaves out of 10 leaves, and the region in which powdery mildew had developed was 1/5 or more of the surface area of one leaf.

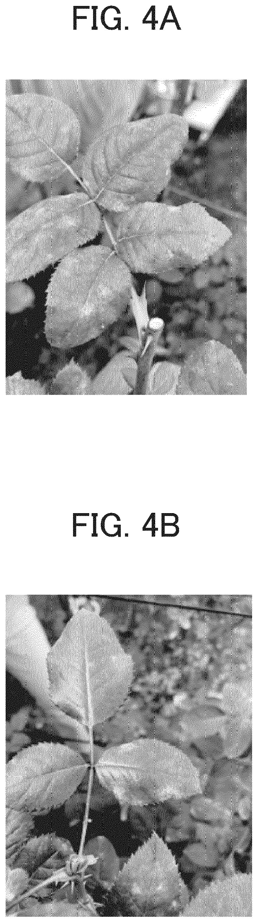

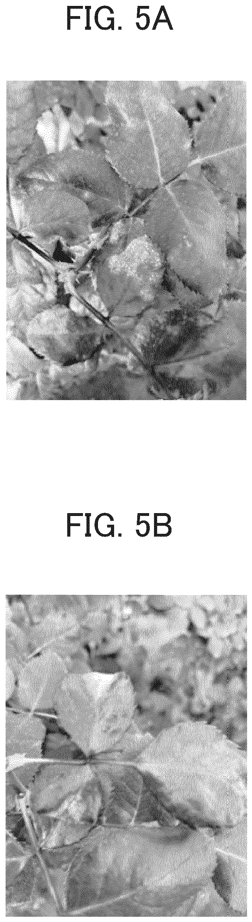

The evaluation results in the respective test areas are as shown in Table 2 below. FIGS. 4A and 4B show leaves of rose cultivated in the test area 2-1 as photographs of the plants falling under the category of "Mild development," and FIGS. 5A and 5B show leaves of rose cultivated in the test area 2-1 as photographs of the plants falling under the category of "Severe development."

**[Table 1]**

| Table 1 | Test area 2-1 | Test area 2-2 |
|---|---|---|
| No development | 33 | 45 |
| Mild development | 13 | 5 |
| Severe development | 4 | 0 |

As is clear from the above evaluation results, compared to the test area 2-1 where nanobubble water was not applied, in the test area 2-2 where nanobubble water was applied, the plants with severe development were eliminated, and the number of plants with mild development was half or less.

As describe above, the results of Experiment 1 and Experiment 2 clearly show the controlling effect on powdery mildew owing to the nanobubble water.

### REFERENCE SIGNS LIST

- 10: nanobubble generating apparatus
- 30: liquid discharger
- 40: gas incorporating device
- 41: vessel
- 42: gas incorporating device body
- 50: nanobubble generating nozzle

## Claims

1. A method of controlling powdery mildew, the method comprising applying nanobubble water to a plant,
wherein the nanobubble water contains bubbles in an amount of from 1 × 10⁸ to 1 × 10¹⁰ bubbles/mL generated by a pressurized dissolution method, and
wherein bubbles contained in the nanobubble water include oxygen where, the containing oxygen means to contain oxygen at a higher concentration than the oxygen concentration in the air.

2. The method of controlling powdery mildew according to claim 1, wherein at least one of sprinkling using the nanobubble water and sprinkling of an agrochemical diluted with the nanobubble water is carried out.

3. The method of controlling powdery mildew according to claim 1 or 2, wherein the nanobubble water contains bubbles with a modal particle size of from 10 to 500 nm.

4. The method of controlling powdery mildew according to any one of claims 1 to 3, wherein the plant is a fruit vegetable.

5. The method of controlling powdery mildew according to claims 1-3, wherein the plant is a solanaceous plant or a rosaceous plant.

6. The method of controlling powdery mildew according to claim 5, wherein the plant is bell pepper or rose.

## Patentansprüche

1. Verfahren zum Bekämpfen von Echtem Mehltau, wobei das Verfahren Aufbringen von Nanobubble-Wasser auf eine Pflanze umfasst,
wobei das Nanobubble-Wasser Bläschen in einer Menge von 1 × 10⁸ bis 1 × 10¹⁰ Bläschen/ml enthält, die durch ein Auflösungsverfahren unter Druck erzeugt wurden, und
wobei die in dem Nanobubble-Wasser enthaltenen Bläschen Sauerstoff enthalten, wobei das Sauerstoff enthalten bedeutet, dass Sauerstoff in einer höheren Konzentration als die Sauerstoffkonzentration in der Luft enthalten ist.

2. Verfahren zum Bekämpfen von Echtem Mehltau nach Anspruch 1, wobei mindestens eines von Besprühen mit dem Nanobubble-Wasser und Besprühen mit einer mit dem Nanobubble-Wasser verdünnten Agrochemikalie durchgeführt wird.

3. Verfahren zum Bekämpfen von Echtem Mehltau nach Anspruch 1 oder 2, wobei das Nanobubble-Wasser Bläschen mit einer modalen Partikelgröße von 10 bis 500 nm enthält.

4. Verfahren zum Bekämpfen von Echtem Mehltau nach einem der Ansprüche 1 bis 3, wobei die Pflanze ein Fruchtgemüse ist.

5. Verfahren zum Bekämpfen von Echtem Mehltau nach den Ansprüchen 1-3, wobei die Pflanze ein Nachtschattengewächs oder ein Rosengewächs ist.

6. Verfahren zum Bekämpfen von Echtem Mehltau nach Anspruch 5, wobei die Pflanze Paprika oder Rose ist.

## Revendications

1. Procédé de contrôle de l'oïdium, le procédé comprenant l'application de l'eau à nanobulles à une plante,
dans lequel l'eau à nanobulles contient des bulles en quantité de 1 × 10⁸ à 1 × 10¹⁰ bulles/mL obtenues par un procédé de dissolution sous pression, et
dans lequel les bulles contenues dans l'eau à nanobulles contiennent de l'oxygène où, contenant l'oxygène signifie contenir de l'oxygène à une concentration plus élevée que la concentration d'oxygène dans l'air.

2. Procédé de contrôle de l'oïdium selon la revendication 1, dans lequel au moins une parmi l'aspersion utilisant l'eau à nanobulles et l'aspersion d'un produit agrochimique dilué avec l'eau à nanobulles est effectuée.

3. Procédé de contrôle de l'oïdium selon la revendication 1 ou 2, dans lequel l'eau à nanobulles contient des bulles d'une taille modale des particules de 10 à 500 nm.

4. Procédé de contrôle de l'oïdium selon l'une quelconque des revendications 1 à 3, la plante étant un légume-fruit.

5. Procédé de contrôle de l'oïdium selon les revendications 1 à 3,
la plante étant une plante solanacée ou une plante rosacée.

6. Procédé de contrôle de l'oïdium selon la revendication 5, la plante étant le poivron ou la rose.
